(19) Europäisches Patentamt
European Patent Office
Office européen des brevets

(11) **EP 3 816 612 B1**

(12) **FASCICULE DE BREVET EUROPEEN**

(45) Date de publication et mention
de la délivrance du brevet:
**01.12.2021 Bulletin 2021/48**

(51) Int Cl.:
***G01N 21/64*** (2006.01)

(21) Numéro de dépôt: **20203138.1**

(22) Date de dépôt: **21.10.2020**

(54) **DISPOSITIF D'EXCITATION ET DE DÉTECTION DE PHOTOLUMINESCENCE**

VORRICHTUNG ZUR ANREGUNG UND ERFASSUNG VON PHOTOLUMINESZENZ

PHOTOLUMINESCENCE EXCITATION AND DETECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.10.2019 FR 1912217**

(43) Date de publication de la demande:
**05.05.2021 Bulletin 2021/18**

(73) Titulaire: **Commissariat à l'Energie Atomique et aux Energies Alternatives**
**75015 Paris (FR)**

(72) Inventeurs:
• **RACINE, Benoit**
  **38054 GRENOBLE CEDEX 9 (FR)**
• **BLANDIN, Pierre**
  **38054 GRENOBLE CEDEX 9 (FR)**
• **QUESNEL, Etienne**
  **38054 GRENOBLE CEDEX 9 (FR)**

(74) Mandataire: **Cabinet Beaumont**
**4, Place Robert Schuman**
**B.P. 1529**
**38025 Grenoble Cedex 1 (FR)**

(56) Documents cités:
**US-B1- 6 331 438     US-B2- 7 768 650**

## Description

<u>Domaine technique</u>

La présente description concerne de façon générale les dispositifs d'excitation et de détection de photoluminescence, notamment de fluorescence.

<u>Technique antérieure</u>

On appelle photoluminescence la capacité d'une entité, appelée luminophore, à absorber de la lumière dans une gamme spectrale définie et à réémettre de la lumière dans une bande spectrale décalée vers les plus hautes longueurs d'onde.

Pour certaines applications, notamment en imagerie biologique ou pour faire du suivi de réaction, il est souhaitable de disposer d'un dispositif compact d'excitation d'un luminophore et de détection de la lumière réémise par le luminophore par photoluminescence. Le marqueur photoluminescent peut être intégré dans l'échantillon à étudier et permettre de suivre de manière spécifique certaines entités ou des réactions.

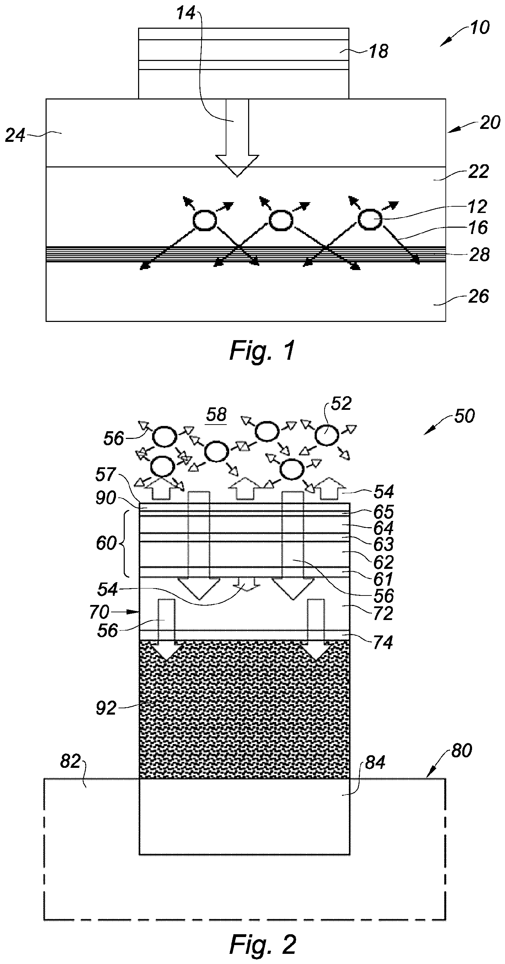

La figure 1 est une vue en coupe, partielle et schématique, d'un exemple d'un dispositif 10 d'excitation d'objets 12 à étudier, notamment des objets biologiques, par un rayonnement d'excitation 14 de longueur d'onde $\lambda_{source}$, et de détection d'un rayonnement de photoluminescence 16 de longueur d'onde $\lambda_{fluo}$ émis par les objets 12 après absorption du rayonnement d'excitation 14.

Le dispositif d'excitation et de détection 10 comprend :

- une source lumineuse 18, par exemple une diode électroluminescente, d'émission du rayonnement d'excitation 14 ;

- un support 20 comprenant une cavité 22 contenant les objets 12 à étudier, la source lumineuse 18 éclairant les objets 12 au travers d'une partie 24 du support 20 transparente au rayonnement d'excitation 14 ;

- un capteur 26 du rayonnement de photoluminescence 16 disposé du côté de la cavité 22 opposé à la source lumineuse 18 ; et

- un filtre optique 28 interposé entre la cavité 22 et le capteur 26 et adapté à laisser passer seulement le rayonnement de photoluminescence 16.

En fonctionnement, les objets 12 à étudier sont disposés dans la cavité 22 qui peut être étanche et sont illuminés par le rayonnement d'excitation 14. Les objets 12 émettent alors le rayonnement de photoluminescence 16 qui est détecté par le capteur 26. Dans une telle configuration, seul le rayonnement de photoluminescence 16 émis dans la même direction que le rayonnement d'excitation 14 peut être détecté par le capteur 26. Le capteur 26 peut comprendre un seul photodétecteur. Dans ce cas, le dispositif d'excitation et de détection 10 peut être utilisé pour détecter la présence ou l'absence d'objets 12 (signal de photoluminescence ou non) et pour mesurer leur concentration relative par le niveau de signal de photoluminescence. Le capteur 26 peut comprendre une matrice de photodétecteurs. Dans ce cas, le dispositif d'excitation et de détection 10 peut être utilisé pour réaliser de l'imagerie de fluorescence puisqu'une information spatiale est également détectée.

Le dispositif d'excitation et de détection 10 illustré en figure 1 présente plusieurs inconvénients. Un inconvénient est que le filtre optique 28 doit bloquer la portion du rayonnement d'excitation 14 qui est passée au travers du milieu 22, c'est-à-dire non absorbée par les objets 12 à étudier, et qui est généralement relativement intense et laisser passer le rayonnement de photoluminescence 16 qui est généralement d'intensité beaucoup plus faible. Le filtre optique 28 doit donc avoir un taux de réjection élevé, le taux de réjection correspondant au rapport entre la transmittance du filtre à la longueur d'onde $\lambda_{fluo}$ et la transmittance du filtre à la longueur d'onde $\lambda_{source}$. Ceci impose généralement, pour réaliser le filtre optique 28, d'utiliser un filtre interférentiel à structure multicouche complexe, qui peut être coûteux à fabriquer. Un autre inconvénient est que la source 18 et le capteur 26 sont disposés de part et d'autre des objets 12 à étudier, ce qui impose des contraintes sur le dispositif d'excitation et de détection 10. En effet, toutes les parties du dispositif 10 sur le parcours du rayonnement 14 entre la source 18 et les objets 12 doivent être transparentes au rayonnement 14 et toutes les parties du dispositif 10 sur le parcours du rayonnement 16 entre les objets 12 et le capteur 26 doivent être transparentes au rayonnement 16. En outre, pour rendre maximal le signal détecté, il faut que la source 18 et le capteur 26 soient tous les deux près des objets 12, ce qui impose des contraintes mécaniques sur l'épaisseur des parois de la cavité 22 à la fois du côté de la source 18 et du côté du capteur 26.

Le document US 6,331,438 B1 décrit un dispositif d'excitation de molécules photoluminescentes par un rayonnement d'excitation et de détection d'un rayonnement de photoluminescence émis par les molécules après absorption du rayonnement d'excitation. Le dispositif comprend une paroi destinée à venir en contact avec les molécules photoluminescentes, une diode électroluminescente organique d'émission du rayonnement d'excitation et transparente au rayonnement de photoluminescence comprenant une couche électroluminescente entre deux électrodes transparentes, un filtre optique situé du côté de la diode électroluminescente organique opposé à la paroi et ne laissant passer que la longueur d'onde du rayonnement de photoluminescence et un capteur du rayonnement de photoluminescence situé du côté du filtre optique opposé à la diode électroluminescente organique.

Le document US 7,768,650 B2 divulgue un dispositif intégré d'excitation d'objets par un rayonnement d'excitation et de détection d'un rayonnement de photoluminescence émis par les objets après absorption du rayonnement d'excitation. Le dispositif comprend une paroi destinée à venir en contact avec les objets, un substrat sur lequel sont formés côte à côte une diode électroluminescente organique et une photodiode à micro-cavité verticale accordée sur la longueur d'onde du rayonnement de photoluminescence, ladite micro-cavité formant un résonateur optique.

Résumé de l'invention

Un mode de réalisation pallie tout ou partie des inconvénients des dispositifs d'excitation et de détection de photoluminescence connus.

Un objet d'un mode de réalisation est que le dispositif d'excitation et de détection de photoluminescence soit compact.

Un autre objet d'un mode de réalisation est que le dispositif d'excitation et de détection de photoluminescence ne comprenne pas de filtre optique de structure complexe et à coût de fabrication élevé, notamment un filtre interférentiel à structure multicouche complexe et à coût de fabrication élevé.

Un autre objet d'un mode de réalisation est que, lorsque le dispositif d'excitation et de détection de photoluminescence comprend un filtre optique, celui-ci corresponde à un filtre optique à faible coût de fabrication.

Un autre objet d'un mode de réalisation est que la source lumineuse du dispositif d'excitation et de détection de photoluminescence soit proche des objets à étudier.

La présente invention prévoit un dispositif d'excitation d'objets par un rayonnement d'excitation et de détection d'un rayonnement de photoluminescence émis par les objets après absorption du rayonnement d'excitation selon la revendication 1, ledit dispositif comprenant :

- une paroi destinée à venir en contact avec les objets ;
- une première diode électroluminescente organique d'émission du rayonnement d'excitation et transparente au rayonnement de photoluminescence ;
- un résonateur optique accordé sur la longueur d'onde du rayonnement de photoluminescence et situé du côté de la première diode électroluminescente organique opposé à la paroi, le résonateur optique comprenant deux miroirs semi-réfléchissants et une couche organique ou inorganique entre lesdits deux miroirs semi-réfléchissants, la première diode électroluminescente organique comprenant une électrode correspondant à l'un des miroirs semi-réfléchissants ; et
- au moins un premier capteur du rayonnement de photoluminescence disposé du côté du résonateur optique opposé à la première diode électroluminescente organique.

Selon un mode de réalisation, le dispositif comprend en outre un filtre optique entre le résonateur optique et le premier capteur.

Selon un mode de réalisation, le dispositif comprend en outre un élément diffusant entre le résonateur optique et le premier capteur.

Selon un mode de réalisation, le dispositif comprend un deuxième capteur du rayonnement de photoluminescence ou d'un rayonnement de photoluminescence supplémentaire à une longueur d'onde différente de la longueur d'onde du rayonnement de photoluminescence, le deuxième capteur étant disposé du côté de la paroi opposé à la première diode électroluminescente organique.

Selon un mode de réalisation, la première diode électroluminescente organique est adaptée à émettre le rayonnement d'excitation comprenant un premier pic de puissance à une première longueur d'onde et un deuxième pic de puissance à une deuxième longueur d'onde différente de la première longueur d'onde.

Selon un mode de réalisation, le dispositif comprend une deuxième diode électroluminescente organique et un écran opaque interposé entre la deuxième diode électroluminescente organique et le premier capteur.

Un mode de réalisation prévoit également un système comprenant plusieurs dispositifs tels que définis précédemment.

La présente invention prévoit également un procédé d'excitation d'objets par un rayonnement d'excitation et de détection d'un rayonnement de photoluminescence émis par les objets après absorption du rayonnement d'excitation selon la revendication 8, ledit procédé mettant en oeuvre le dispositif tel que défini précédemment, comprenant la mise en contact de la paroi avec les objets. <u>Brève description des dessins</u>

Ces caractéristiques et avantages, ainsi que d'autres, seront exposés en détail dans la description suivante de modes de réalisation particuliers faite à titre non limitatif en relation avec les figures jointes parmi lesquelles :

la figure 1, décrite précédemment, représente un exemple d'un dispositif d'excitation lumineuse d'objets à étudier et de détection d'un rayonnement de photoluminescence émis par les objets ;

la figure 2 représente un mode de réalisation d'un dispositif à performances améliorées d'excitation lumineuse d'objets à étudier et de détection d'un rayonnement de photoluminescence émis par les objets ;

la figure 3 représente un mode de réalisation d'un détecteur comprenant plusieurs exemplaires du dispositif d'excitation et de détection représenté en figure 2 ;

la figure 4 représente un autre mode de réalisation d'un dispositif d'excitation et de détection de photoluminescence ;

la figure 5 représente un autre mode de réalisation, non-revendiqué, d'un dispositif d'excitation et de détection de photoluminescence ;

la figure 6 illustre une étape d'un procédé de fabrication du dispositif d'excitation et de détection de photoluminescence représenté en figure 2 ;

la figure 7 illustre une autre étape du procédé de fabrication ;

la figure 8 illustre une autre étape du procédé de fabrication ; et

la figure 9 illustre une autre étape du procédé de fabrication.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les étapes et éléments utiles à la compréhension des modes de réalisation décrits ont été représentés et sont détaillés. En particulier, le procédé et le système de commande de la source lumineuse et le procédé et le système de traitement des signaux fournis par le capteur du dispositif d'excitation et de photoluminescence sont bien connus d'un homme du métier et ne sont pas décrits par la suite.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à un dispositif d'excitation et de détection dans une position normale d'utilisation. Sauf précision contraire, les expressions "environ", "approximativement", "sensiblement", et "de l'ordre de" signifient à 10 % près, de préférence à 5 % près.

La transmittance d'une couche correspond au rapport entre l'intensité du rayonnement sortant de la couche et l'intensité du rayonnement entrant dans la couche. Dans la suite de la description, une couche ou un film est dit opaque à un rayonnement lorsque la transmittance du rayonnement au travers de la couche ou du film est inférieure à 10 %, de préférence inférieure à 5 %. Dans la suite de la description, une couche ou un film est dit transparent ou semi-transparent à un rayonnement lorsque la transmittance du rayonnement au travers de la couche ou du film est supérieure à 10 %, de préférence supérieure à 20 %, plus préférentiellement supérieure à 50 %. En outre, dans la suite de la description, une couche ou un film est dit semi-réfléchissant lorsque le rapport entre l'intensité du rayonnement se réfléchissant sur la couche ou le film et l'intensité du rayonnement atteignant la couche ou le film est supérieur à 10 %, de préférence supérieure à 20 %, et que le rapport entre l'intensité du rayonnement entrant dans la couche ou le film et l'intensité du rayonnement atteignant la couche ou le film est supérieur à 10 %. De plus, on considère ici que les termes "isolant" et "conducteur" signifient respectivement "isolant électriquement" et "conducteur électriquement".

Dans la suite de la description, l'indice de réfraction d'un matériau correspond à l'indice de réfraction du matériau pour une plage de longueurs d'onde utile. Sauf indication contraire, l'indice de réfraction est considéré sensiblement constant sur la plage de longueurs d'onde utile, par exemple égal à la moyenne de l'indice de réfraction sur la plage de longueurs d'onde utile.

Dans la suite de la description, un film ou une couche est dit étanche à l'oxygène lorsque la perméabilité du film ou de la couche à l'oxygène à 40 °C est inférieure à $1.10^{-1}cm^3/(m^2.jour)$, de préférence inférieure à $1.10^{-2}cm^3/(m^2.jour)$, plus préférentiellement inférieure à $1.10^{-3}cm^3/(m^2.jour)$. La perméabilité à l'oxygène peut être mesurée selon la méthode ASTM D3985 intitulée "Standard Test Method for Oxygen Gas Transmission Rate Through Plastic Film and Sheeting Using a Coulometric Sensor". Dans la suite de la description, un film ou une couche est dit étanche à l'eau lorsque la perméabilité du film ou de la couche à l'eau à 40 °C est inférieure à $1.10^{-1}g/(m^2*jour)$, de préférence inférieure à $1.10^{-3}g/(m^2*jour)$, plus préférentiellement inférieure à $1.10^{-5}g/(m^2*jour)$. La perméabilité à l'eau peut être mesurée selon la méthode ASTM F1249 intitulée "Standard Test Method for Water Vapor Transmission Rate Through Plastic Film and Sheeting Using a Modulated Infrared Sensor".

La figure 2 est une vue en coupe, partielle et schématique, d'un mode de réalisation d'un dispositif 50 d'excitation d'objets 52 à étudier, par example des objets biologiques 52, par un rayonnement d'excitation 54 de longueur d'onde $\lambda_{source}$ et de détection d'un rayonnement de photoluminescence 56 de longueur d'onde $\lambda_{fluo}$ émis par les objets 52 après absorption du rayonnement d'excitation 54. A titre d'exemple, les objets 52 à étudier peuvent correspondre à des protéines, à de l'ADN de cellules marquées à l'aide d'un luminophore, à des cellules génétiquement modifiées pour être fluorescentes, à des billes fluorescentes ou des boîtes quantiques (en anglais quantum dots) liés à des anticorps, etc. Le rayonnement d'excitation 54 est de préférence sensiblement monochromatique à la longueur d'onde $\lambda_{source}$, cette dernière étant comprise dans la bande spectrale d'absorption du luminophore observé. Un exemple d'application concerne la microscopie par fluorescence, notamment la microscopie par épifluorescence.

Le dispositif d'excitation et de détection 50 comprend :

- une paroi 57 au contact avec le milieu contenant les objets 52 à étudier, la paroi 57 pouvant délimiter, au moins en partie une cavité 58, partiellement représentée en figure 2, contenant les objets 52 à étudier ;

- une diode électroluminescente organique 60 (OLED, sigle anglais pour Organic Light Emitting Diode) d'émission du rayonnement d'excitation 54, la diode électroluminescente 60 étant transparente au rayonnement de photoluminescence 56 ;

- une cavité optique 70, également appelée résonateur optique, accordée sur la longueur d'onde $\lambda_{fluo}$, située du côté de la diode électroluminescente 60 opposé à la paroi 57 ; et

- au moins un capteur 80 du rayonnement de photoluminescence 56 disposé du côté de la cavité optique 70 opposé à la diode électroluminescente 60, le capteur 80 comprenant un support 82 et au moins un photodétecteur 84, par exemple une photodiode, adapté à détecter le rayonnement de photoluminescence 56.

La diode électroluminescente 60 peut être séparée de la cavité 58 par un revêtement de protection 90, qui délimite alors la paroi 57, et qui peut être un capot de verre ou une structure monocouche ou multicouche.

Dans le mode de réalisation représenté en figure 2, le dispositif d'excitation et de détection 50 comprend un élément optique 92 interposé entre la cavité optique 70 et le photodétecteur 80. Selon un mode de réalisation, l'élément optique 92 correspond à un élément diffusant. Selon un autre mode de réalisation, l'élément optique 92 correspond à un masque codant, également appelé masque d'amplitude ou masque de phase. Selon un autre mode de réalisation, l'élément optique 92 correspond à un filtre optique. L'élément 92 peut ne pas être présent, la cavité optique 70 étant alors au contact du photodétecteur 84. Lorsque l'élément optique 92 correspond à un filtre optique, il peut s'agir d'un filtre de couleur.

Selon un mode de réalisation, le dispositif d'excitation et de détection 50 est mis en contact avec le milieu contenant les objets 52 à étudier par l'intermédiaire de la paroi 57 qui est par exemple appliquée contre le milieu contenant les objets 52. Le dispositif d'excitation et de détection 50 peut alors ne pas contenir de cavité 58. Un exemple d'application correspond à l'endoscopie ou au contrôle de surface. Lorsque le dispositif d'excitation et de détection 50 comprend la cavité 58 délimitée au moins en partie par la paroi 57, un échantillon contenant les objets 52 à étudier peut être introduit dans la cavité 58.

Le fonctionnement du dispositif d'excitation et de détection 50 est le suivant : la diode électroluminescente 60 émet le rayonnement d'excitation 54 dans toutes les directions et notamment préférentiellement en direction des objets 52 à étudier. Les objets 52 absorbent au moins en partie le rayonnement d'excitation 54 et réémettent dans toutes les directions le rayonnement de photoluminescence 56 et notamment au travers de la diode électroluminescente 60 en direction de la cavité optique 70. La cavité optique 70 est un dispositif dans lequel certains rayons lumineux sont susceptibles de rester confinés grâce à des miroirs semi-transparents sur lesquels ils se réfléchissent. La lumière réfléchie plusieurs fois par les miroirs peut interférer avec elle-même. Il en découle que seules quelques longueurs d'onde, et leurs ondes associées, peuvent être présentes dans la cavité optique 70. Dans le présent mode de réalisation, la cavité optique 70 ne laisse passer que le rayonnement de photoluminescence 56 qui est détecté par le photodétecteur 84.

Selon un mode de réalisation, en utilisant par exemple la protéine fluorescente verte (GFP, sigle anglais pour green fluorescent protein), la longueur d'onde $\lambda_{source}$ est comprise entre 450 nm et 480 nm et la longueur d'onde $\lambda_{fluo}$ est comprise entre 505 nm et 550 nm. Ces longueurs d'onde sont ajustables en fonction du luminophore choisi.

Le dispositif d'excitation et de détection 50 peut être utilisé seul ou associé à d'autres dispositifs d'excitation et de détection 50.

Selon un mode de réalisation, le support 82 peut correspondre à un substrat semiconducteur, par exemple en silicium, et le photodétecteur 84 peut correspondre à une photodiode inorganique formée dans le support 82. En particulier, le support 82 et le photodétecteur 84 peuvent correspondre à un capteur CMOS (sigle anglais pour Complementary Metal-Oxide-Semiconductor). Selon un autre mode de réalisation, le support 82 peut être en un matériau diélectrique. Le support 82 est, par exemple, un support rigide, notamment en verre ou un support flexible, par exemple en polymère ou en un matériau métallique. Des exemples de polymères sont le polyéthylène naphtalène (PEN), le polyéthylène téréphtalate (PET), le polyimide (PI), et le polyétheréthercétone (PEEK). L'épaisseur du support 82 est alors, par exemple, comprise entre 20 μm et 1 cm, par exemple environ 125 μm. Le photodétecteur 84 peut alors correspondre à une photodiode organique.

Selon un mode de réalisation, la diode électroluminescente organique 60 comprend un empilement de couches comportant :

- une première électrode 61 métallique ;

- une première couche d'interface 62 ;

- une couche active 63 ;

- une deuxième couche d'interface 64 ; et

- une deuxième électrode 65 non métallique.

La couche active 63 est interposée entre les première et deuxième couches d'interface 62, 64. La première couche d'interface 62 est interposée entre la première électrode 61 et la couche active 63. La deuxième couche d'interface 64 est interposée entre la couche active 63 et la deuxième électrode 65. La première couche d'interface 62 et/ou la deuxième couche d'interface 64 peut ne pas être présente.

Selon un mode de réalisation, le matériau composant la première électrode 61 est choisi parmi le groupe consistant en :

- un métal ou un alliage métallique, par exemple de l'argent (Ag), de l'or (Au), du plomb (Pb), du palladium (Pd), du cuivre (Cu), du nickel (Ni), du tungstène (W), du molybdène (Mo), de l'aluminium (Al), du chrome (Cr), ou un alliage de magnésium et d'argent (MgAg) ;

- des nanofils d'argent et/ou de cuivre ; et

- un mélange d'au moins deux de ces matériaux.

La deuxième électrode 65 est avantageusement non métallique pour empêcher la formation d'une cavité optique dans l'empilement des couches 61, 62, 63 et 64 qui laisserait passer le rayonnement 54 à la longueur d'onde $\lambda_{source}$ et bloquerait le rayonnement à la longueur d'onde $\lambda_{fluo}$. Selon un mode de réalisation, le matériau composant la deuxième électrode 65 est choisi parmi le groupe consistant en :

- un oxyde conducteur tel que l'oxyde de tungstène ($WO_3$), l'oxyde de nickel (NiO), l'oxyde de vanadium ($V_2O_5$), l'oxyde d'étain ($SnO_2$), ou l'oxyde de molybdène ($MoO_3$), notamment un oxyde conducteur transparent (TCO, sigle anglais pour Transparent Conductive Oxide), notamment de l'oxyde d'indium dopé à l'étain (ITO, sigle anglais pour Indium Tin Oxide), un oxyde de zinc et d'aluminium (AZO, acronyme anglais pour Aluminium Zinc Oxide), un oxyde de gallium et de zinc (GZO, acronyme anglais pour Gallium Zinc Oxide), une structure multicouche ITO/Ag/ITO, une structure multicouche ITO/Mo/ITO, une structure multicouche AZO/Ag/AZO ou une structure multicouche ZnO/Ag/ZnO ;

- un polymère conducteur, notamment une polyaniline ou le polymère PEDOT:PSS, qui est un mélange de poly(3,4)-éthylènedioxythiophène et de polystyrène sulfonate de sodium ;

- des nanofils de carbone ;

- du graphène ; et

- un mélange d'au moins deux de ces matériaux.

L'épaisseur de la première électrode 61 peut être comprise entre 10 nm et 30 nm. L'épaisseur de la deuxième électrode 65 peut être comprise entre 10 nm et 200 nm. La nature différente des première et deuxième électrodes 61, 65 fait que le rayonnement 54 émis par la diode électroluminescente 60 peut se propager préférentiellement vers les objets 52.

La couche d'interface 62 ou 64 peut correspondre à une couche injectrice d'électrons ou à une couche injectrice de trous. Le travail de sortie de la couche d'interface 62 ou 64 est adapté à bloquer, collecter ou injecter des trous et/ou des électrons suivant que cette couche d'interface joue le rôle d'une cathode ou d'une anode. Plus précisément, lorsque la couche d'interface 62 ou 64 joue le rôle d'anode, elle correspond à une couche injectrice de trous et bloqueuse d'électrons. Le travail de sortie de la couche d'interface 62 ou 64 est alors supérieur ou égal à 4,5 eV, de préférence supérieur ou égal à 5 eV. Lorsque la couche d'interface 62 ou 64 joue le rôle de cathode, elle correspond à une couche injectrice d'électrons et bloqueuse de trous. Le travail de sortie de la couche d'interface 62 ou 64 est alors inférieur ou égal à 4,5 eV, de préférence inférieur ou égal à 4,2 eV.

Dans le cas où la couche d'interface 62 ou 64 joue le rôle d'une couche injectrice d'électrons, le matériau composant la couche d'interface 62 ou 64 est choisi parmi le groupe consistant en :

- un oxyde métallique, notamment un oxyde de titane ou un oxyde de zinc ;

- un système hôte/dopant moléculaire, notamment les produits commercialisés par la société Novaled sous les appellations NET-5/NDN-1 ou NET-8/MDN-26 ;

- un polymère conducteur ou semiconducteur dopé, par exemple le polymère PEDOT:Tosylate qui est un mélange de poly(3,4)-éthylènedioxythiophène et de tosylate ;

- un carbonate, par exemple du $CsCO_3$ ;

- un polyélectrolyte, par exemple du poly[9,9-bis(3'-(N,N-diméthylamino)propyl)-2,7-fluorène-alt-2,7-(9,9-dioctyfluorène)] (PFN), du poly[3- (6-triméthylammoniumhexyl) thiophène] (P3TMAHT) ou du poly[9,9-bis(2-éthylhexyl) fluorène]-b-poly[3-(6-triméthylammoniumhexyl] thiophène (PF2/6-b-P3TMAHT) ;

- un polymère de polyéthylèneimine (PEI) ou un polymère de polyéthylèneimine éthoxylée (PEIE), propoxylée et/ou butoxylée ; et

- un mélange de deux ou de plus de deux de ces matériaux.

Dans le cas où la couche d'interface 62 ou 64 joue le rôle d'une couche injectrice de trous, le matériau composant la couche d'interface 62 ou 64 peut être choisi parmi le groupe consistant en :

- un polymère conducteur ou semiconducteur dopé, notamment les matériaux commercialisés sous les appellations Plexcore OC RG-1100, Plexcore OC RG-1200 par la société Sigma-Aldrich, le polymère PEDOT:PSS, qui est un mélange de poly(3,4)-éthylènedioxythiophène et de polystyrène sulfonate de sodium, ou une polyaniline ;

- un système hôte/dopant moléculaire, notamment les produits commercialisés par la société Novaled sous les appellations NHT-5/NDP-2 ou NHT-18/NDP-9 ;

- un polyélectrolyte, par exemple le Nafion ;

- un oxyde métallique, par exemple un oxyde de molybdène, un oxyde de vanadium, de l'ITO, ou un oxyde de nickel ; et

- un mélange de deux ou de plus de deux de ces matériaux.

L'épaisseur de chaque couche d'interface 62, 64 est comprise entre 5 nm et 10 $\mu$m, de préférence entre 10 nm et 1 $\mu$m, notamment de l'ordre de 30 nm.

La couche active 63 est la couche depuis laquelle est émise la majorité du rayonnement électromagnétique fourni par la diode électroluminescente 60. La diode électroluminescente 60 est dite organique dans la mesure où la couche active 63 est en majorité, de préférence en totalité, en au moins un matériau organique ou un mélange de matériaux organiques ou organométalliques.

La couche active 63 comprend au moins un matériau organique et peut comprendre un empilement ou un mélange de plusieurs matériaux organiques. La couche active 63 peut comprendre un mélange d'un polymère donneur d'électrons et d'une molécule accepteuse d'électrons. La zone fonctionnelle de la couche active 63 est délimitée par le recouvrement entre la première couche d'interface 62 et la deuxième couche d'interface 64. Les courants traversant la zone fonctionnelle de la couche active 63 peuvent varier de quelques picoampères à quelques dizaines de milliampères. L'épaisseur de la couche active 63 peut être comprise entre 10 nm et 1 $\mu$m, par exemple de l'ordre de 30 nm.

La couche active 63 peut comprendre des petites molécules, des oligomères ou des polymères. Il peut s'agir de matériaux organiques ou inorganiques. La couche active 63 peut comprendre un matériau semiconducteur ambipolaire, ou un mélange d'un matériau semiconducteur de type N et d'un matériau semiconducteur de type P, par exemple sous forme de couches superposées ou de mélange intime à l'échelle nanométrique de façon à former une hétérojonction en volume.

Des exemples de polymères semiconducteurs de type P adaptés à la réalisation de la couche active 63 sont le poly(3-hexylthiophène) (P3HT), le poly[N- 9'-heptadécanyl-2,7-carbazole-alt-5,5-(4,7-di-2-thiényl-2',1',3'-benzothiadiazole)] (PCDTBT), le Poly[(4,8-bis-(2-éthylhexyloxy)-benzo[1,2-b;4,5-b']dithiophène)-2,6-diyl-alt-(4-(2-éthylhexanoyl)-thie-no[3,4-b]thiophène))-2,6-diyl ;4,5-b']dithi-ophène)-2,6-diyl-alt-(5,5'-bis(2-thiényl)-4,4,-dinonyl-2,2'-bithiazole)-5',5''-diyl] (PBDTTT-C), le poly[2-méthoxy-5-(2-éthyl-hexyloxy)-1,4-phénylène-vinylène] (MEH-PPV) ou le Poly[2,6-(4,4-bis-(2-éthylhexyl)-4H-cyclopenta [2,1-*b*;3,4-*b*']dithiophène)-*alt*-4,7(2,1,3-benzothiadiazole)] (PCPDTBT).

Des exemples de matériaux semiconducteurs de type N adaptés à la réalisation de la couche active 63 sont les fullerènes, notamment le C60, le [6,6]-phényl-$C_{61}$-butanoate de méthyle ([60]PCBM), le [6,6]-phényl-$C_{71}$-butanoate de méthyle ([70]PCBM), le pérylène diimide, l'oxyde de zinc (ZnO) ou des nanocristaux permettant la formation de boîtes quantiques, en anglais quantum dots.

L'épaisseur de l'empilement comprenant la première couche d'interface 62, la couche active 63 et la deuxième couche d'interface 64 est comprise entre 100 nm et 4 $\mu$m, de préférence entre 120 nm et 2 $\mu$m.

La cavité optique 70 comprend un empilement de couches comportant :

- une première couche semi-réfléchissante qui, dans le présent mode de réalisation, correspond à l'électrode 61 de la diode électroluminescente 60 ;

- une couche intermédiaire 72 ayant une épaisseur L et un indice de réfraction n ; et

- une deuxième couche semi-réfléchissante 74, la couche intermédiaire 72 étant interposée entre les première et deuxième couches semi-réfléchissantes 61 et 74.

La deuxième couche semi-réfléchissante 74 peut être dans l'un des matériaux décrits précédemment pour la première électrode 61 et la deuxième électrode 65. L'épaisseur de la deuxième couche semi-réfléchissante 74 est comprise entre 10 nm et 50 nm.

La couche intermédiaire 72 peut être en un matériau organique ou inorganique. Lorsque la couche intermédiaire 72 est en un matériau organique, elle peut correspondre à tous les matériaux organiques d'injection de trous ou d'électrons mentionnés précédemment, au tris(8-hydroxy-quinolinato)aluminium ($Alq_3$), au 2,2',7,7'-tetra(N,N -di-p - tolyl)amino-9,9-spirobifluorène (STTB), aux résines réticulables à faible température, ou aux polymères photosensibles. Lorsque la couche intermédiaire 72 est en un matériau inorganique, elle peut correspondre à du diélectrique de type SiO, $SiO_2$, $SnO_2$, $WO_3$ ou à tous les diélectriques déposables en couche mince à faible température (inférieure à 100 °C).

L'épaisseur L est donnée par la relation [Math. 1] suivante :

[Math. 1]

$$L = \frac{m\lambda}{4n}$$

où $\lambda$ est la longueur d'onde qui peut sortir de la cavité optique 70, c'est-à-dire la longueur d'onde $\lambda_{fluo}$ du rayonnement de photoluminescence 56, où m est un entier généralement égal à 1, et où n est, comme cela a été indiqué précédemment, l'indice de réfraction du matériau de la couche 72.

A titre d'exemple, dans le cas où la longueur d'onde $\lambda_{fluo}$ est égale à environ 520 nm, ce qui correspond à la couleur verte, que l'indice de réfraction de la couche intermédiaire 72 est égal à 1,8, que le coefficient m est égal à 1, l'épaisseur L de la couche intermédiaire 72 est égal à environ 72 nm. De façon générale, l'épaisseur de la couche intermédiaire 72 est comprise entre 50 nm et 300 nm.

Selon un mode de réalisation, le revêtement de protection 90 comprend au moins une couche étanche à l'oxygène et à l'eau. Cette couche peut être en matériaux inorganiques comme $TiO_2$, $Al_2O_3$, SiO, ou $SiO_2$, ou en matériaux organiques de type polymère ou résine. Cette couche de protection peut également être composée de multicouches alternant des matériaux organiques et matériaux inorganiques. L'épaisseur du revêtement de protection 90 peut être comprise entre 25 nm et 100 $\mu$m. Le revêtement de protection peut également être un capot de verre dont l'épaisseur peut être comprise entre 50 μm et 700 μm.

L'élément optique 92 peut correspondre à un filtre absorbant pour lequel la lumière est bloquée sur la base des propriétés d'absorption du matériau utilisé pour réaliser l'élément optique 92. Lorsque l'élément optique 92 correspond à un filtre de couleur, il peut correspondre à une couche de résine colorée, un verre coloré, par exemple le verre commercialisé sous l'appellation HOYA G545, une couche de gélatine ou une couche de polymère dans laquelle des colorants organiques sont dissous de sorte que c'est le colorant organique choisi qui détermine les propriétés spectrales du filtre. Le polymère peut être de l'acétate de cellulose ou une autre matière plastique. L'épaisseur de l'élément optique 92 peut alors être comprise entre 50 μm et 5 mm.

L'élément optique 92 peut correspondre à un filtre dichroïque, comprenant une alternance de couches minces d'indices de réfraction et d'épaisseurs choisies permettant de réfléchir une partie de la lumière incidente et de transmettre la partie utile. Lorsque l'élément optique 92 correspond à un filtre dichroïque, l'épaisseur de l'empilement de couches formant l'élément optique 92 peut alors être comprise entre 2 μm et 5 μm.

Lorsque l'élément optique 92 correspond à un élément diffusant, il peut correspondre à une couche de verre dépoli. L'épaisseur de l'élément optique 92 peut alors être comprise entre 50 μm et 1 mm. Cet élément diffusant permet d'avoir un effet lentille en augmentant l'ouverture numérique de collection de la lumière (récupération de la lumière émise à des angles plus importants, donc de fréquences spatiales plus élevées correspondant à des objets plus petits), mais détériore l'image enregistrée (nécessité d'une reconstruction numérique) et réduit la quantité de signal collecté. Ce diffuseur a typiquement un angle de diffusion compris entre 0,5° et 5°. L'élément optique 92 peut à la fois correspondre à un élément diffusant et à un filtre optique.

Lorsque l'élément optique 92 correspond à un masque codant, il peut correspondre à une couche de chrome déposée sur une lamelle de verre et gravée localement par des étapes de photolithographie et gravure. L'épaisseur de l'élément optique 92 peut alors être comprise entre 50 μm et 1 mm.

Les dimensions de la cavité 58, lorsqu'elle est présente, dépendent des applications envisagées. Selon un mode de réalisation, la cavité 58 présente un volume compris entre 5 μL et 1 mL.

Selon un mode de réalisation, le dispositif d'excitation et de détection 50 comprend une couche réfléchissante, non représentée, qui délimite la cavité 58, du côté opposé à la paroi 57. La couche réfléchissante a pour effet de réfléchir à la fois la partie du rayonnement d'excitation 54 qui n'a pas été absorbée au premier passage à travers l'échantillon à étudier, et qui pourra être absorbée après réflexion au retour par les objets 52, et la partie du rayonnement de photoluminescence 56 qui est émis par les objets 52 dans la direction opposée à la diode électroluminescente organique 60 et au capteur 80 de façon à la renvoyer vers le capteur 80.

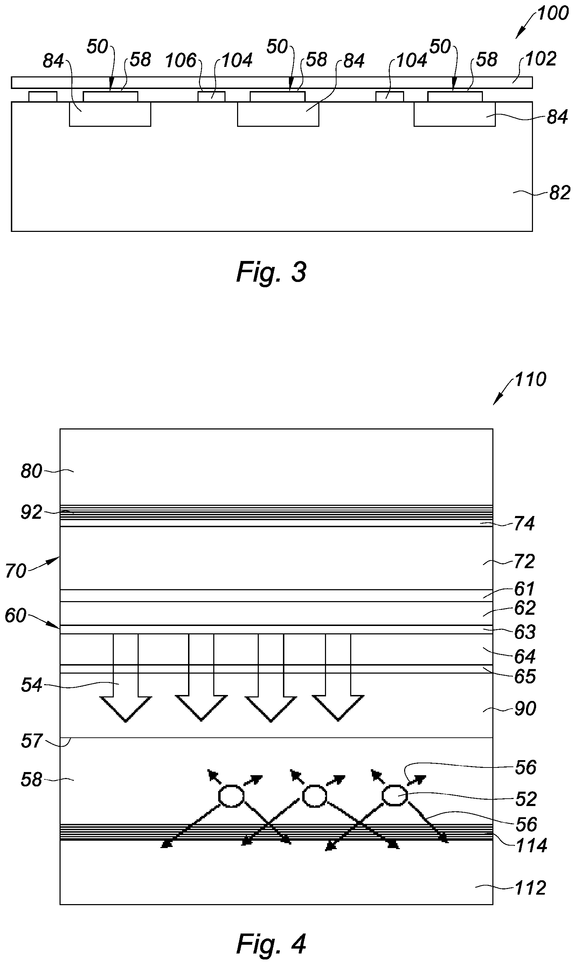

La figure 3 est une vue en coupe, partielle et schématique, d'un mode de réalisation d'un système d'excitation et de détection 100 comprenant un réseau de dispositifs d'excitation et de détection 50 tels que représentés en figure 2. Le système d'excitation et de détection 100 peut comprendre de 1 à 100 dispositifs d'excitation et de détection 50. Selon un mode de réalisation, le support 82 des capteurs 84 des dispositifs d'excitation et de détection 50 est commun à tous les dispositifs d'excitation et de détection 50. Selon un mode de réalisation, le support 82 peut correspondre à un substrat semiconducteur, par exemple en silicium, et chaque photodétecteur 84 peut correspondre à une photodiode formée dans le support 82.

Selon un mode de réalisation, le système 100 peut comprendre un capot 102 qui recouvre les dispositifs d'excitation et de détection 50 et qui délimite la cavité 58 correspondante avec chaque dispositif d'excitation et de détection 50. On a en outre représenté en figure 3 des protubérances 104 en surface du support 82 et qui participent à délimiter avec le capot 102 des chemins de circulation 106 vers les cavités 58 et depuis les cavités 58. Selon un autre mode de réalisation, le détecteur 100 est fixé à une carte microfluidique qui comprend des systèmes de transport des objets 52 jusqu'aux cavités 58.

Le système 100, ou le dispositif d'excitation et de détection 50 utilisé seul, peut être utilisé pour la détection et la quantification de la photoluminescence. Dans ce cas, l'élément 92 peut ne pas être présent ou correspondre à un filtre optique adapté à laisser passer le rayonnement de photoluminescence 56 et à bloquer le rayonnement d'excitation 54, en complément de la cavité optique 70. Le système 100 peut être utilisé pour réaliser une image de photoluminescence résolue spatialement. Dans ce cas, l'élément 92 peut correspondre à un élément diffusant ou à un masque codant et le système de traitement des signaux fournis par les photodétecteurs 84 est adapté à reconstruire une image à partir des signaux captés.

Un avantage du dispositif d'excitation et de détection 50 est qu'il peut être réalisé de façon compacte et robuste. En effet, les couches composant la cavité optique 70 et la diode électroluminescente organique 60 peuvent être déposées directement sur le capteur 80, ou sur la carte microfluidique.

Un autre avantage du dispositif d'excitation et de détection 50 est que la diode électroluminescente organique 60 peut être proche des objets 52 à étudier. En effet, dans le présent mode de réalisation, la diode électroluminescente organique 60 n'est séparée des objets 52 que par le revêtement de protection 90.

Un autre avantage du dispositif d'excitation et de détection 50 est que le capteur 80 peut être proche des objets 52 à étudier étant donné la faible épaisseur de la diode électroluminescente organique 60 et de la cavité optique 70.

Ceci améliore l'intensité du rayonnement de photoluminescence 56 capté par le capteur 80. Cette proximité peut également permettre de récupérer une information spatiale qui, du fait de l'incohérence de l'émission de photoluminescence, disparait très rapidement avec la propagation du signal.

La figure 4 est une vue en coupe, partielle et schématique, d'un autre mode de réalisation d'un dispositif 110 d'excitation d'objets 52 à étudier par le rayonnement d'excitation 54 et de détection du rayonnement de photoluminescence 56 émis par les objets 52 après absorption du rayonnement d'excitation 54.

Le dispositif 110 comprend l'ensemble des éléments du dispositif 50 représenté en figure 2 et comprend, en outre, du côté de la cavité 58 opposé à la diode électroluminescente organique 60, un capteur 112 du rayonnement de photoluminescence 56 et un filtre optique 114, par exemple un filtre interférentiel, interposé entre la cavité 58 et le capteur 112, et adapté à laisser passer seulement le rayonnement de photoluminescence 56.

Selon un mode de réalisation, l'utilisation de deux capteurs 80 et 112 permet de capter une plus grande quantité du rayonnement de photoluminescence 56 par rapport à un dispositif d'excitation et de détection 50 ne comprenant que le capteur 80. La sensibilité du dispositif d'excitation et de détection 110 peut ainsi être plus élevée que la sensibilité du dispositif d'excitation et de détection 50.

Les capteurs 80 et 112 du rayonnement de photoluminescence 56 peuvent avoir des propriétés différentes. Selon un mode de réalisation, le capteur 112 peut être un capteur avec une sensibilité supérieure à la sensibilité du capteur 80 mais avec une résolution spatiale inférieure à la résolution spatiale du capteur 80. Dans ce cas, le capteur 80 peut être utilisé pour réaliser de l'imagerie de photoluminescence et le capteur 112 peut être utilisé pour faire de la détection de photoluminescence.

Selon un autre mode de réalisation, le capteur 112 est adapté à détecter un rayonnement de photoluminescence à une longueur d'onde $\lambda_{fluo2}$ différente de la longueur d'onde $\lambda_{fluo}$. Le dispositif 110 peut alors être utilisé avec des objets 52 susceptibles d'émettre l'un ou l'autre de deux rayonnements de photoluminescence à des longueurs d'onde différentes lorsqu'ils sont excités par le rayonnement d'excitation 54, selon la configuration dans laquelle se trouvent ces objets 52. Le dispositif 110 peut en outre être utilisé simultanément avec des premiers et deuxièmes objets 52, les premiers objets étant susceptibles d'émettre un rayonnement de photoluminescence 56 à la longueur d'onde $\lambda_{fluo}$ lorsqu'ils absorbent le rayonnement d'excitation 54 à la longueur d'onde $\lambda_{source}$ et les deuxièmes objets étant susceptibles d'émettre un autre rayonnement de photoluminescence 56 à la longueur d'onde $\lambda_{fluo2}$ lorsqu'ils absorbent le rayonnement d'excitation 54 à la longueur d'onde $\lambda_{source}$. Le dispositif 110 peut en outre être utilisé simultanément avec des premiers et deuxièmes objets 52, les premiers objets étant susceptibles d'émettre un rayonnement de photoluminescence à la longueur d'onde $\lambda_{fluo}$ lorsqu'ils absorbent le rayonnement d'excitation 54 à la longueur d'onde $\lambda_{source}$ et les deuxièmes objets étant susceptibles d'émettre un rayonnement de photoluminescence à la longueur d'onde $\lambda_{fluo2}$ lorsqu'ils absorbent un autre rayonnement d'excitation 54 à une longueur d'onde $\lambda_{source2}$. La diode électroluminescente organique 60 présente alors un spectre d'émission avec deux pics d'émission aux longueurs d'onde $\lambda_{source}$ et $\lambda_{source2}$.

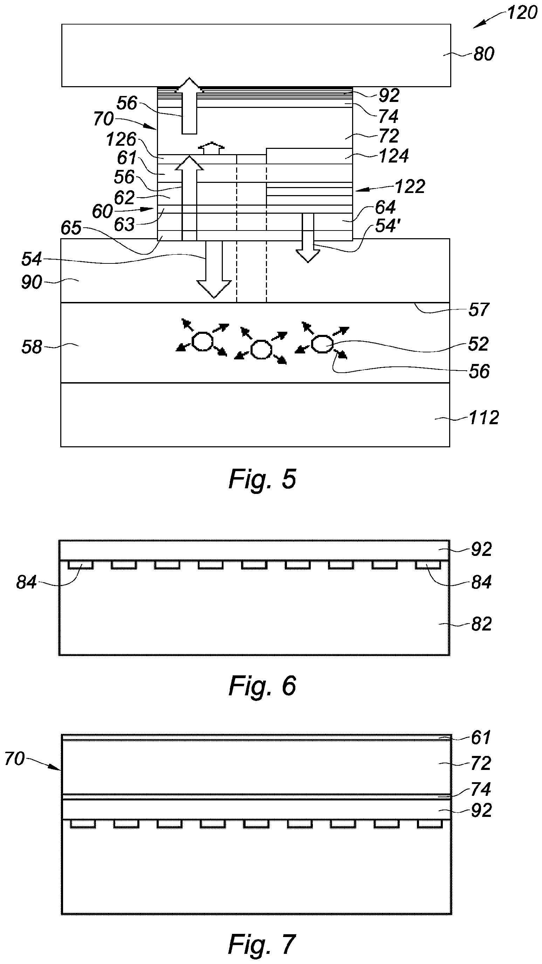

La figure 5 est une vue en coupe, partielle et schématique, d'un autre mode de réalisation, non-revendiqué, d'un dispositif 120 d'excitation d'objets 52 par le rayonnement d'excitation 54 et de détection du rayonnement de photoluminescence 56 émis par les objets 52 après absorption du rayonnement d'excitation 54.

Le dispositif 120 comprend l'ensemble des éléments du dispositif 110 représenté en figure 4 et comprend, en outre, une diode électroluminescente organique 122 supplémentaire. Selon un mode de réalisation, la diode électroluminescente organique 122 supplémentaire est réalisée de façon adjacente à la diode électroluminescente organique 60, c'est-à-dire interposée entre la cavité 58 et la cavité optique 70. Selon un mode de réalisation, au moins certaines des couches de la diode électroluminescente organique 122 et de la diode électroluminescente organique 60 sont communes. Dans le mode de réalisation illustré en figure 5, les électrodes 61 et 65, la couche active 63 et la couche d'interface 64 sont communes aux deux diodes électroluminescentes 60 et 122.

Selon un mode de réalisation, le dispositif 120 comprend en outre une couche 124, interposée entre la diode électroluminescente organique 122 et le capteur 80, qui est opaque au rayonnement émis par la diode électroluminescente organique 122. La couche opaque 124 empêche que le rayonnement d'excitation 54' émis par la diode électroluminescente organique 122 n'atteigne le capteur 80. A titre d'exemple, la couche opaque 124 est située entre la diode électroluminescente organique 122 et la couche organique 72 de la cavité optique 70. Selon un mode de réalisation, la cavité optique 70 comprend, du côté de la cavité 58, un miroir semi-réfléchissant 126, distinct de l'électrode 61, seulement en vis-à-vis de la diode électroluminescente 60.

Selon un mode de réalisation, la diode électroluminescente organique 122 supplémentaire est adaptée à émettre un rayonnement 54' sensiblement monochromatique à une longueur d'onde $\lambda_{source2}$ différente de la longueur d'onde $\lambda_{source}$. Dans ce cas, le capteur 112 peut alors être adapté pour réaliser de l'imagerie fluorescente.

Selon un mode de réalisation, la diode électroluminescente organique 122 est adaptée à émettre un rayonnement à spectre étroit centré sur une longueur d'onde $\lambda_{source2}$ différente de la longueur d'onde $\lambda_{source}$. Dans ce cas, le capteur 112 peut alors être adapté pour réaliser de l'imagerie holographique. Selon un mode de réalisation, la diode électroluminescente organique 122 est adaptée à émettre un rayonnement à spectre large, par exemple de la lumière blanche. Le capteur 112 peut alors être adapté pour réaliser de l'imagerie en absorption.

Les figures 6 à 9 sont des vues en coupe, partielles et schématiques, de structures obtenues à des étapes successives d'un procédé de fabrication du système d'excitation et de détection 100 décrit précédemment en relation avec la figure 3.

La figure 6 représente la structure obtenue après la formation dans le support 82 d'un réseau de photodétecteurs 84 et la fabrication de l'élément optique 92, par exemple un filtre optique, un élément diffusant ou un masque codant.

La figure 7 représente la structure obtenue après la formation de la cavité optique 70 sur l'élément optique 92, comprenant le dépôt successif de la couche semi-réfléchissante 74, de la couche intermédiaire 72 et de la couche semi-réfléchissante 61.

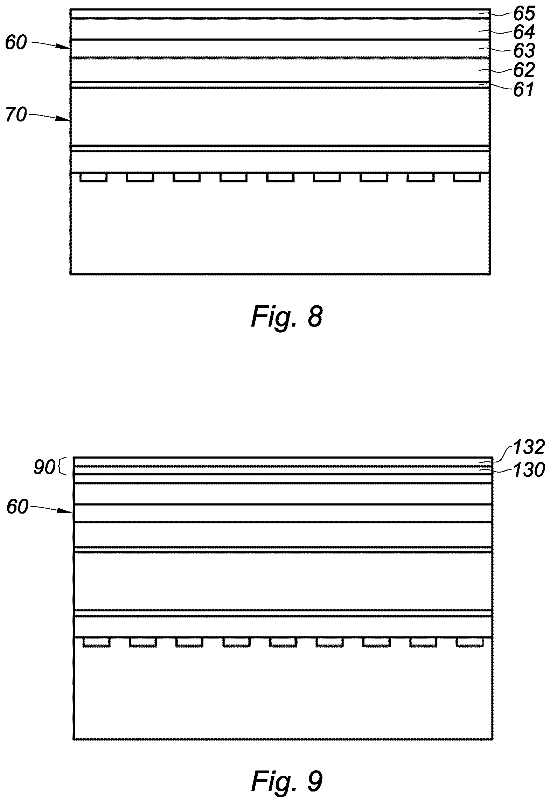

La figure 8 représente la structure obtenue après la formation de la diode électroluminescente organique 60 sur la cavité optique 70, comprenant successivement le dépôt de la première couche d'interface 62, de la couche active 63, de la deuxième couche d'interface 64, et de la deuxième électrode 65.

La figure 9 représente la structure obtenue après la formation du revêtement de protection 90 sur la diode électroluminescente 60, qui, à titre d'exemple, comprend un empilement de deux couches 130 et 132.

Selon le matériau composant chaque couche de l'élément optique 92, de la cavité optique 70, de la diode électroluminescente organique 60 et du revêtement de protection 90, le procédé de formation de la couche peut correspondre à un procédé du type dépôt à la tournette, revêtement par pulvérisation, héliographie, revêtement à fente (en anglais slot-die coating), revêtement à la lame (en anglais blade-coating), flexographie ou sérigraphie. Selon le procédé de dépôt mis en oeuvre, une étape de séchage des matériaux déposés peut être prévue.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, bien que, dans les modes de réalisation décrits précédemment, le dispositif d'excitation lumineuse d'objets à étudier et de détection d'un rayonnement de photoluminescence émis par les objets ne comprenne qu'une seule cavité optique 70, il est clair que le dispositif d'excitation et de détection peut comprendre au moins deux résonateurs optiques en cascade pour augmenter l'efficacité du blocage du rayonnement à la longueur d'onde $\lambda_{source}$. Enfin, la mise en oeuvre pratique des modes de réalisation et variantes décrits est à la portée de l'homme du métier à partir des indications fonctionnelles données ci-dessus.

**Revendications**

1. Dispositif (50) d'excitation d'objets (52) par un rayonnement d'excitation (54) et de détection d'un rayonnement de photoluminescence (56) émis par les objets (52) après absorption du rayonnement d'excitation, comprenant :

   - une paroi (57) destinée à venir en contact avec les objets ;
   - une première diode électroluminescente organique (60) d'émission du rayonnement d'excitation et transparente au rayonnement de photoluminescence ;
   - un résonateur optique (70) accordé sur la longueur d'onde du rayonnement de photoluminescence et situé du côté de la première diode électroluminescente organique opposé à la paroi, le résonateur optique (70) comprenant deux miroirs semi-réfléchissants (61, 74) et une couche organique ou inorganique (72) entre lesdits deux miroirs semi-réfléchissants, la première diode électroluminescente organique (60) comprenant une électrode (61) correspondant à l'un des miroirs semi-réfléchissants (61, 74) ; et
   - au moins un premier capteur (80) du rayonnement de photoluminescence disposé du côté du résonateur optique opposé à la première diode électroluminescente organique.

2. Dispositif selon la revendication 1, comprenant en outre un filtre optique (92) entre le résonateur optique (70) et le premier capteur (80).

3. Dispositif selon la revendication 1 ou 2, comprenant en outre un élément diffusant (92) entre le résonateur optique (70) et le premier capteur (80).

4. Dispositif selon l'une quelconque des revendications 1 à 3, comprenant un deuxième capteur (112) du rayonnement de photoluminescence ou d'un rayonnement de photoluminescence supplémentaire à une longueur d'onde différente de la longueur d'onde du rayonnement de photoluminescence, le deuxième capteur étant disposé du côté de la paroi (57) opposé à la première diode électroluminescente organique (60).

5. Dispositif selon l'une quelconque des revendications 1 à 4, dans lequel la première diode électroluminescente organique (60) est adaptée à émettre le rayonnement d'excitation (54) comprenant un premier pic de puissance à une première longueur d'onde et un deuxième pic de puissance à une deuxième longueur d'onde différente de la première longueur d'onde.

**6.** Dispositif selon la revendication 4, comprenant une deuxième diode électroluminescente organique (122) et un écran opaque (124) interposé entre la deuxième diode électroluminescente organique (122) et le premier capteur (80), le deuxième capteur (112) et la deuxième diode électroluminescente organique (122) étant aptes à réaliser une imagerie fluorescente, une imagerie holographique ou une imagerie en absorption.

**7.** Système (100) comprenant plusieurs dispositifs selon l'une quelconque des revendications 1 à 6.

**8.** Procédé d'excitation d'objets (52) par un rayonnement d'excitation (54) et de détection d'un rayonnement de photoluminescence (56) émis par les objets (52) après absorption du rayonnement d'excitation mettant en oeuvre le dispositif selon l'une quelconque des revendications 1 à 6, comprenant la mise en contact de la paroi avec les objets.

**Patentansprüche**

**1.** Vorrichtung (50) zum Anregen von Objekten (52) mit einer Anregungsstrahlung (54) und zum Erfassen einer Photolumineszenzstrahlung (56), die von den Objekten (52) nach der Absorption der Anregungsstrahlung emittiert wird, wobei die Vorrichtung Folgendes aufweist:

- eine Wand (57), die dazu bestimmt ist, mit den Objekten in Kontakt zu kommen;
- eine erste organische Leuchtdiode (60) zum Emittieren der Anregungsstrahlung, wobei die erste organische Leuchtdiode (60) für die Photolumineszenzstrahlung transparent ist;
- einen optischen Resonator (70), der auf die Wellenlänge der Photolumineszenzstrahlung abgestimmt und auf der der Wand gegenüberliegenden Seite der ersten organischen Leuchtdiode angeordnet ist, wobei der optische Resonator (70) zwei halbdurchlässige Spiegel (61, 74) und eine organische oder anorganische Schicht (72) zwischen den beiden halbdurchlässigen Spiegeln aufweist, wobei die erste organische Leuchtdiode (60) eine Elektrode (61) aufweist, die einem der halbdurchlässigen Spiegel (61, 74) entspricht; und
- mindestens einen ersten Sensor (80) für die Photolumineszenzstrahlung, der auf der der ersten organischen Leuchtdiode gegenüberliegenden Seite des optischen Resonators angeordnet ist.

**2.** Vorrichtung nach Anspruch 1, die ferner ein optisches Filter (92) zwischen dem optischen Resonator (70) und dem ersten Sensor (80) aufweist.

**3.** Vorrichtung nach Anspruch 1 oder 2, die ferner ein Streuelement (92) zwischen dem optischen Resonator (70) und dem ersten Sensor (80) aufweist.

**4.** Vorrichtung nach einem der Ansprüche 1 bis 3, die einen zweiten Sensor (112) für die Photolumineszenzstrahlung oder für eine zusätzliche Photolumineszenzstrahlung mit einer von der Wellenlänge der Photolumineszenzstrahlung verschiedenen Wellenlänge aufweist, wobei der zweite Sensor auf der der ersten organischen Leuchtdiode (60) gegenüberliegenden Seite der Wand (57) angeordnet ist.

**5.** Vorrichtung nach einem der Ansprüche 1 bis 4, wobei die erste organische Leuchtdiode (60) in der Lage ist, die Anregungsstrahlung (54) zu emittieren, die eine erste Leistungsspitze bei einer ersten Wellenlänge und eine zweite Leistungsspitze bei einer zweiten, von der ersten Wellenlänge verschiedenen Wellenlänge aufweist.

**6.** Vorrichtung nach Anspruch 4, wobei die Vorrichtung eine zweite organische Leuchtdiode (122) und einen undurchsichtige Schirm (124) aufweist, der zwischen der zweiten organischen Leuchtdiode (122) und dem ersten Sensor (80) angeordnet ist, wobei der zweite Sensor (112) und die zweite organische Leuchtdiode (122) in der Lage sind, ein Fluoreszenzbild, ein holographisches Bild oder ein Absorptionsbild zu erzeugen.

**7.** System (100) mit einer Vielzahl von Vorrichtungen nach einem der Ansprüche 1 bis 6.

**8.** Verfahren zum Anregen von Objekten (52) mit einer Anregungsstrahlung (54) und zum Erfassen einer Photolumineszenzstrahlung (56), die von den Objekten (52) nach der Absorption der Anregungsstrahlung emittiert wird, bei dem die Vorrichtung nach einem der Ansprüche 1 bis 6 eingesetzt wird, wobei die Wand mit den Objekten in Kontakt gebracht wird.

**Claims**

1.  A device (50) for exciting objects (52) with an excitation radiation (54) and for detecting a photoluminescence radiation (56) emitted by the objects (52) after the absorption of the excitation radiation, comprising:

    - a wall (57) intended to come into contact with the objects;
    - a first organic light-emitting diode (60) for emitting the excitation radiation and transparent to the photoluminescence radiation;
    - an optical resonator (70) tuned to the wavelength of the photoluminescence radiation and located on the side of the first organic light-emitting diode opposite to the wall, the optical resonator (70) comprising two two-way mirrors (61, 74) and an organic or inorganic layer (72) between said two two-way mirrors, the first organic light-emitting diode (60) comprising an electrode (61) corresponding to one of the two-way mirrors (61, 74); and
    - at least one first sensor (80) of the photoluminescence radiation arranged on the side of the optical resonator opposite to the first organic light-emitting diode.

2.  The device according to claim 1, further comprising an optical filter (92) between the optical resonator (70) and the first sensor (80).

3.  The device according to claim 1 or 2, further comprising a diffusing element (92) between the optical resonator (70) and the first sensor (80).

4.  The device according to any of claims 1 to 3, comprising a second sensor (112) of the photoluminescence radiation or of an additional photoluminescence radiation at a wavelength different from the wavelength of the photoluminescence radiation, the second sensor being arranged on the side of the wall (57) opposite to the first organic light-emitting diode (60).

5.  The device according to any of claims 1 to 4, wherein the first organic light-emitting diode (60) is capable of emitting the excitation radiation (54) comprising a first power peak at a first wavelength and a second power peak at a second wavelength different from the first wavelength.

6.  The device according to claim 4, comprising a second organic light-emitting diode (122) and an opaque shield (124) interposed between the second organic light-emitting diode (122) and the first sensor (80), the second sensor (112) and the second organic light-emitting diode (122) being capable of forming a fluorescent image, a holographic image or an absorption image.

7.  A system (100) comprising a plurality of devices according to any of claims 1 to 6.

8.  A method of exciting objects (52) with an excitation radiation (54) and of detecting a photoluminescence radiation (56) emitted by the objects (52) after the absorption of the excitation radiation, implementing the device according to any of claims 1 to 6, comprising the placing into contact of the wall with the objects.

Fig. 1

Fig. 2

Fig. 3

Fig. 4

120

80

92
74
56
70
72
126
124
61
56
62
122
60
63
64
65
54'
54
90
57
58
52
56
112

## Fig. 5

92
84
84
82

## Fig. 6

61
72
70
74
92

## Fig. 7

Fig. 8

Fig. 9

**EP 3 816 612 B1**

## RÉFÉRENCES CITÉES DANS LA DESCRIPTION

**Documents brevets cités dans la description**

- US 6331438 B1

- US 7768650 B2